# EUROPÄISCHE PATENTSCHRIFT

(11) **EP 1 077 825 B1**
(45) Veröffentlichungstag und Bekanntmachung des Hinweises auf die Patenterteilung: **17.10.2001**
(21) Anmeldenummer: 99920835.8
(22) Anmeldetag: 03.05.1999
(51) Int. Cl.: B60K 17/02, B60K 23/02, B60T 7/08, B60K 41/22, B60K 41/24, F15B 13/10

(54) **ANTRIEBSVORRICHTUNG**
DRIVING DEVICE
DISPOSITIF D'ENTRAINEMENT

(30) Priorität: 09.05.1998 DE 19820903
(43) Veröffentlichungstag der Anmeldung: 28.02.2001
(73) Patentinhaber: ZF FRIEDRICHSHAFEN Aktiengesellschaft, 88038 Friedrichshafen (DE)
(72) Erfinder: HEILIG, Eduard, D-88048 Friedrichshafen (DE)
(86) Internationale Anmeldenummer: EP9902982
(87) Internationale Veröffentlichungsnummer: WO9958357

(56) Entgegenhaltungen:
- DE-A1- 4 408 472
- US-A- 3 724 609
- US-A- 4 195 716

## Beschreibung

Die vorliegende Erfindung betrifft eine Antriebsvorrichtung, insbesondere zum Antrieb der Räder eines Kraftfahrzeuges, wie z. B. Radbagger und Radlader, nach dem Oberbegriff des Anspruchs 1.

Es ist bekannt, bei Lastschaltgetrieben, wie sie in derartigen Nutzfahrzeugen Verwendung finden, eine Hilflöseeinrichtung vorzusehen, durch die der Antriebsstrang des Fahrzeugs unterbrochen und somit ein liegengebliebenes Fahrzeug abgeschleppt werden kann.

Die gattungsgemäße DE 44 08 472 der Anmelderin beschreibt eine Antriebsvorrichtung, die mit einem Antrieb, einem diesem nachgeschalteten mechanischen Getriebe und zwei hydraulisch schaltbaren Reibungskupplungen bzw. Reibungsbremsen versehen ist, über die der Antrieb mit dem Getriebe verbindbar ist und die die Funktionen einer Feststellbremse erfüllen. Reibungskupplung und Reibungsbremse sind dabei über Steuerdruckleitungen mit einer Hilfslöseeinrichtung verbunden, die einen verstellbaren Speicherkolben und damit zusammenarbeitende Schaltkolben aufweist, so dass bei Betätigung des Speicherkolbens die Schaltkolben das Volumen des Speicherkolbens über die Steuerdruckleitungen der Reibungskupplung und der Reibungsbremse im Sinne einer Trennung zuführen.

Die Vorrichtung kann einen Ausgleichszylinder aufweisen, in dem ein durch eine Federeinrichtung vorgespannter Ausgleichskolben angeordnet ist, der mit dem Volumen des Speicherkolbens in Verbindung steht, so dass im hydraulischen System der Hilfslöseeinrichtung immer ein gleichbleibender Druck vorherrscht und Druckveränderungen aufgrund von Temperaturschwankungen problemlos ausgeglichen werden.

Aufgabe der vorliegenden. Erfindung ist es, eine derartige Antriebsvorrichtung, mit der ein Fahrzeug im liegengebliebenen Zustand problemlos abgeschleppt werden kann, in ihrem Aufbau weiter zu vereinfachen und dadurch die Herstellungskosten zu verringern.

Die Lösung dieser Aufgabe erfolgt mit den im kennzeichnenden Teil Anspruchs 1 angegebenen Merkmalen; vorteilhafte Ausgestaltungen sind in den Unteransprüchen beschrieben.

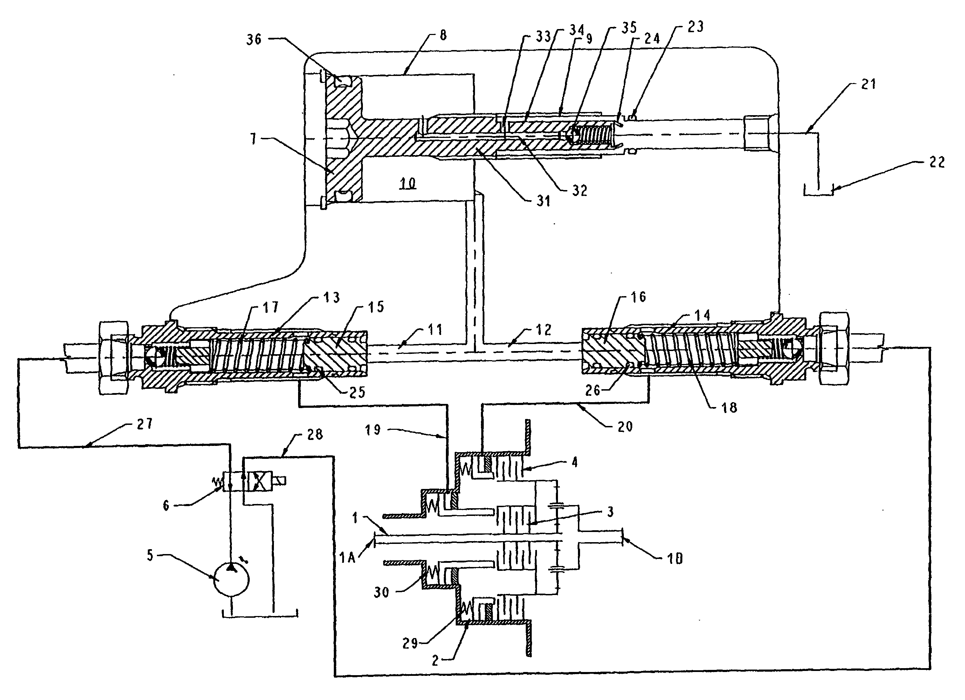

Im folgenden wird die Erfindung anhand der Zeichnung näher erläutert, in der ein vorteilhaftes Ausführungsbeispiel dargestellt ist.

In der einzigen Figur ist schematisch der wesentliche Teil der Antriebsvorrichtung zusammen mit der Hilfslöseeinrichtung in deren unbetätigtem Zustand dargestellt.

Die Trennung eines mit 1 bezeichneten Antriebsstranges mit einer Antriebsseite 1A und einer Abtriebsseite 1B erfolgt auf bekannte Weise mit einer hydraulisch betätigten Kupplungseinrichtung 2, die eine Reibungskupplung 3 und eine Reibungsbremse 4 aufweist, wobei letztere nicht die eigentliche Funktion einer Bremse erfüllt, sondern ebenfalls eine Kupplung darstellt, bei der jedoch die äusseren Lamellen innerhalb des Kupplungsgehäuses fest angeordnet sind, so dass sie zur besseren Unterscheidung als Reibungsbremse 4 bezeichnet wird. Bei der Reibungskupplung 3 können sich sowohl die inneren als auch die äusseren Lamellen drehen.

Zur Versorgung der Vorrichtung mit Hydrauliköl. ist eine Pumpe 5 vorgesehen, wobei über ein Magnetventil 6 das Ein- und Auskuppeln der Kupplungseinrichtung 2 angesteuert wird.

Das Magnetventil. 6 ist hierbei derart geschaltet, dass im Falle eines Ausfallens der Pumpe 5 oder ganz allgemein bei einem Druckabfall innerhalb des Hydrauliksystems, die Kupplung automatisch eingerückt wird, so dass es nicht möglich ist, das Fahrzeug abzuschleppen; hierzu ist eine Trennung des Antriebsstranges notwendig.

Diese Trennung des Antriebsstranges erfolgt dadurch, dass ein Speicherkolben 7 in einem Speicherzylinder 8 betätigt wird. Die Betätigung des Speicherkolbens 7 erfolgt manuell, z. B. mit einem geeignet profiliertem Bauteil auf dem Speicherkolben 7 in Form eines Sechskants oder Innensechskants, auf die ein geeignetes Werkzeug angesetzt wird, um den Speicherkolben 7 von Hand zu verschieben.

Beim dargestellten Ausführungsbeispiel weist der Speicherkolben 7, der im mit 8 bezeichneten Speicherzylinder verschoben wird, einen Vorsprung 31 auf, der mit einem Aussengewinde versehen ist und der sich in einen Abschnitt 9 einer Verbindungsleitung 21 zu einem Ölvorratstank 22 erstreckt. Der Vorsprung 31 des Speicherkolbens 7 weist eine sich in Axialrichtung erstreckende Bohrung 32 auf, die einerseits mit dem Volumen 10 des Speicherzylinders 8 und andererseits über einen Kanal 33 mit einem Abschnitt verringerten Querschnitts des Vorsprungs in Verbindung steht, so dass bei dem in der einzigen Figur dargestellten unbetätigten Zustand eine Fluidverbindung vom Volumen 10 des Speicherzylinders 8 zum Vorratstank 22 besteht. Der Abschnitt 9 ist über ein Engstelle 24 mit der eigentlichen Verbindungsleitung 21 verbunden, wobei diese Engstelle 24 derart bemessen ist, dass bei Betätigung der Hilfslöseeinrichtung, d. h. bei Verschieben des Speicherkolbens 7 dessen Abschnitt 9 die Engstelle 24 abdichtend durchsetzt und dadurch die Fluidverbindung zwischen dem Volumen 10 und dem Vorratstank 22 unterbricht. Mit 35 ist ein im Abschnitt 31 des Speicherkolbens 7 vorgesehenes federbelastetes Rückschlagventil bezeichnet, das als Überdruckventil dient, und das einen unzulässig hohen Druck im System bei Betätigung der Hilfslöseeinrichtung verhindert.

Im normalen Fahrzustand ist also das Volumen 10 des Speicherzylinders 8 mit dem Vorratstank 22 verbunden, so dass der Ölraum nach Betätigung der Hilfslöseeinrichtung wieder vollständig befüllt werden kann; während der Betätigung der Hilfslöseeinrichtung ist die Verbindung zwischen Vorratstank 22 und Volumen 10 unterbunden.

In herkömmlicher Weise wird bei Verschiebung des Speicherkolbens 7 das im Volumen 10 befindliche öl über die Leitungen 11, 12, den zwei Schaltventilen 13, 14 zugeführt, so dass die darin angeordneten Schaltkolben 15, 16 betätigt und gegen die Kraft einer Federeinrichtung 17, 18 soweit verschoben werden, dass die Öffnungen von aus den Schaltventilen 13, 14 abzweigenden Leitungen 19, 20 freigegeben werden.

Damit besteht über die Leitungen 19, 20 eine direkte hydraulische Verbindung zwischen dem Volumen 10 des Speicherzylinders 8 und der Kupplungseinrichtung 2, so dass z. B. vom Schaltelement 13 die Reibungskupplung 3 und vom Schaltventil 14 die Reibungsbremse 4 ausgerückt werden kann. Dieses Ausrücken erfolgt gegen den Widerstand von Druckfedern 29, 30 in der Kupplungseinrichtung 2.

Damit durch eine zu grosse Verringerung des Volumens 10 des Speicherzylinders 8, d. h. durch eine zu grosse aus dem Volumen 10 verdrängte Ölmenge, kein zu hoher Druck innerhalb des Hydraulikkreislaufes entsteht, ist das Überdruckventil 35 am Ende der Bohrung 32 im Vorsprung 31 des Speicherkolbens 7 vorgesehen. Auch bei Temperaturschwankungen des Öls wird dadurch dafür gesorgt, dass die sich im geschlossenen Kreislauf befindliche Ölmenge konstant ist, so dass keine Fehlbetätigung der. Schaltkolben 15, 16 auftreten kann.

In den Schaltventilen 13, 14 vorgesehene Dichtungen 25, 26 verhindern, dass Öl aus dem geschlossenen Kreislauf in die Steuerdruckleitungen 27, 28 eindringen kann. Die Dichtung 36 verhindert, daß Öl aus dem Volumen des Zylinders 10 entweichen kann.

Soll der normale Fahrbetrieb wieder aufgenommen werden, so ist die Trennung des Antriebsstranges 1 wieder aufzuheben. Zu diesem Zweck wird der Speicherkolben 7 manuell wieder in seine ursprüngliche Position verschoben, z. B. durch entgegengesetzte Verdrehung des Innensechskants, wobei der Vorsprung 9 in einem Gewinde geführt sei kann. Dadurch vergrössert sich wieder das Volumen 10 im Speicherzylinder 8 durch das zurückfliessende Öl, wodurch die Reibungskupplung 3 und die Reibungsbremse 4 wieder eingerückt werden. Die vorgespannten. Druckfedern 29, 30 in der Kupplungseinrichtung 2, die immer ein automatisches Einrücken der Kupplungseinrichtung 2 bewirken, falls der Öldruck innerhalb des geschlossenen Hydraulikkreislaufes abfallen sollte, bewirken dieses Einrücken.

Die vorgespannten Druckfedern 17, 18 in den Schaltventilen 13, 14 bewegen nun die Schaltkolben 15, 16 ebenfalls wieder in ihre ursprüngliche Stellung, so dass auch das in den Schaltventilen 13, 14 vorhandene Ölvolumen wieder in den Speicherzylinder 8 strömt.

Da, wie bereits ausführt, bei einer Betätigung der Hilfslöseeinrichtung sowohl die Reibungskupplung 3 als auch die Reibungsbremse 4 ausgerückt werden, kann auch bei einer unbeabsichtigten Betätigung des Antriebes keine Leistungsübertragung erfolgen, so dass das Fahrzeug nicht ungewollt bewegt werden kann.

### Bezugszeichen

- 1: Antriebsstrang
- 2: Kupplungseinrichtung
- 3: Reibungskupplung
- 4: Reibungsbremse
- 5: Pumpe
- 6: Magnetventil
- 7: Speicherkolben
- 8: Speicherzylinder
- 9: Abschnitt
- 10: Volumen des Zylinders
- 11: Leitung
- 12: Leitung
- 13: Schaltventil
- 14: Schaltventil
- 15: Schaltkolben
- 16: Schaltkolben
- 17: Druckfeder
- 18: Druckfeder
- 19: Leitung
- 20: Leitung
- 21: Verbindungsleitung
- 22: Vorratstank
- 23: Dichtung
- 24: Engstelle
- 25: Dichtung
- 26 27: Steuerdruckleitung
- 28: Steuerdruckleitung
- 29: Druckfeder
- 30: Druckfeder
- 31: Vorsprung
- 32: Bohrung
- 33: Kanal
- 34: Abschnitt
- 35: Überdruckventil
- 36: Dichtung

## Patentansprüche

1. Antriebsvorrichtung, insbesondere zum Antrieb der Räder eines Kraftfahrzeuges, mit einem Antrieb und einem nachgeschalteten mechanischen Getriebe und zwei schaltbaren Reibungskupplungen (3, 4), wobei
- die Reibungskupplungen (3, 4) durch Federkraft geschlossen und durch Hydraulikdruck geöffnet werden, der über Schaltventile (13, 14) und zugehörige Schaltkolben (15, 16) sowie Steuerdruckleitungen (19, 20) den Reibungskupplungen (3, 4) zugeführt wird,
- über die Reibungskupplungen (3, 4) der Antrieb mit dem Getriebe verbindbar ist,
- beide Reibungskupplungen (3, 4) bei Druckabfall im Hydrauliksystem geschlossen werden und die Funktion einer Feststellbremse erfüllen,
- die Schaltkolben (15, 16) über Leitungen (11, 12) mit einer Hilfslöseeinrichtung zusammenarbeitend verbunden sind, welche einen verstellbaren Speicherkolben (7) und einen Speicherzylinder (8) aufweist und welche im unbetätigten Zustand ein drucklos gehaltenes Ölvolumen enthält und
- bei Betätigung des Speicherkolbens (7) im Speicherzylinder (8) gespeichertes Ölvolumen eine Verschiebung der Schaltkolben (15, 16) bewirkt, um die Leitungen (11, 12) mit den Steuerdruckleitungen (19, 20) zu verbinden, so daß in der Hilfslöseeinrichtung gespeichertes Ölvolumen den Reibungskupplungen im Sinne einer Trennung zugeführt wird,
**dadurch gekennzeichnet**,
- **daß** der Speicherzylinder (8) über eine Verbindungsleitung (21) mit einem Vorratstank (22) in Verbindung steht und
- **daß** die Hilfslöseeinrichtung mit einer Absperreinrichtung (34, 24) versehen ist, die die Verbindung zum Vorratstank (22) bei Betätigung des Speicherkolbens (7) der Hilfslöseeinrichtung unterbricht.

2. Antriebsvorrichtung nach Anspruch 1, **dadurch gekennzeichnet, dass** die Absperreinrichtung aus einer Engstelle (24) am Übergang eines Abschnitts (9) zur Verbindungsleitung (21) besteht, die bei Betätigung des Speicherkolbens (7) von einem Abschnitt (34) verringerten Querschnitts des Abschnitts (9) des Speicherkolbens (7) in dichter Weise durchsetzt wird.

3. Antriebsvorrichtung nach Anspruch 2, **dadurch gekennzeichnet, dass** der Abschnitt (9) des Speicherkolbens (7) von einer axialen Bohrung (32) durchsetzt ist, die einerseits mit dem Volumen (10) des Speicherzylinders (8) und andererseits über einen Kanal (33) mit der Aussenwand des Abschnitts (34) verringerten Querschnitts des Vorsprungs (31) in Verbindung steht, so dass bei unbetätigtem Zustand der Hilfslöseeinrichtung eine Fluidverbindung zwischen Volumen (10) und Vorratstank (22) besteht.

4. Antriebsvorrichtung nach einem der vorhergehenden Ansprüche, **dadurch gekennzeichnet, dass** das der Engstelle (24) zugewandte Ende der Bohrung (32) im Vorsprung (31) mit einem federbelasteten Überdruckventil (35) versehen ist.

5. Antriebsvorrichtung nach einem der vorhergehenden Ansprüche, **dadurch gekennzeichnet, dass** der Speicherkolben (7) handbetätigbar ist.

6. Antriebsvorrichtung nach Anspruch 5, **dadurch gekennzeichnet, dass** der Speicherkolben (7) über ein am Vorsprung (31) angeordnetes Gewinde axial verschiebbar ist.

7. Antriebsvorrichtung nach Anspruch 6, **dadurch gekennzeichnet, dass** der Speicherkolben (7) mit einem Sechskantkopf oder mit einem Innensechskant versehen ist.

8. Antriebsvorrichtung nach einem der Ansprüche 1 bis 7, **dadurch gekennzeichnet, dass** die Schaltkolben (15, 16) mit Federeinrichtungen (17, 18) versehen sind, die die Schaltkolben in Ausgangs- bzw. Grundposition zurückdrücken.

9. Antriebsvorrichtung nach einem der Ansprüche 1 bis 8, **dadurch gekennzeichnet, dass** die Hilfslöseeinrichtung im Getriebeblock des Kraftfahrzeuges integriert ist.

10. Antriebsvorrichtung nach einem der vorhergehenden Ansprüche, **dadurch gekennzeichnet, dass** das ölvolumen der Hilfslöseeinrichtungen über Dichtungen (25, 26) von den Steuerdruckleitungen (27, 28) des Getriebes getrennt ist.

11. Antriebsvorrichtung nach einem der vorhergehenden Ansprüche, **dadurch gekennzeichnet, dass** die Dichtungen (25, 26) auf den Schaltkolben (15, 16) vorgesehen sind.

## Claims

1. Driving device, especially for driving the wheels of a motor vehicle, provided with a drive system and a down-stream mechanical transmission and two controllable friction couplings (3, 4); with
- the friction couplings (3, 4) being closed by spring force and opened by hydraulic pressure fed to the friction couplings (3, 4) via on/off valves (13, 14) and matching control pistons (15, 16) as well as control pressure lines (19, 20);
- the drive system being connectable with the transmission via the friction couplings (3, 4);
- both friction couplings (3, 4) being closed in the event of a pressure drop in the hydraulic system and performing the function of a parking brake;
- the control pistons (15, 16) cooperating and linked via lines (11, 12) with an auxiliary release device having an adjustable accumulation piston (7) and an accumulation cylinder (8) and containing an non-pressurized oil volume in the non-activated state and
- upon activation of the accumulation piston (7) the oil volume in the accumulation cylinder (8) causing the control pistons (15, 16) to shift and connect the lines (11, 12) with the control pressure lines (19, 20), so that oil volume stored in the auxiliary release device is fed to the friction couplings for separation, **characterized in that**
- the accumulation cylinder (8) is linked to a supply tank (22) via a connecting line (21) and
- the auxiliary release device is provided with a cutoff device (34, 24) which interrupts the connection to the supply tank (22) upon activation of the accumulation piston (7).

2. Driving device according to claim 1, **characterized in that** the cutoff device consists of a narrow collar (24) on a transition section (9) to the connecting line (21) and upon actuation of the accumulation piston (7) produces an overlapping sealing contact with a section (34) of reduced cross-section of the section (9) of the accumulation piston (7).

3. Driving device according to claim 2, **characterized in that** the section (9) of the accumulation piston (7) has an axial bore (32) which on the one hand is connected with the volume (10) of the accumulation cylinder (8) and on the other hand is connected via a duct (33) with the external wall of the section (34) of reduced cross-section of the projection (31), so that in the non-active condition of the auxiliary release device a fluid connection exists between volume (10) and supply tank (22).

4. Driving device according to any one of the preceding claims, **characterized in that** the end of the bore (32) facing the narrow collar (24) is provided in the projection (31) with a spring-loaded pressure relief valve (35).

5. Driving device according to any one of the preceding claims, **characterized in that** the accumulation piston (7) can be actuated manually.

6. Driving device according to claim 5, **characterized in that** the accumulation piston (7) is axially displaceable via a thread on the projection (31).

7. Driving device according to claim 6, **characterized in that** the accumulation piston (7) is provided with a hexagon head or an internal hexagon.

8. Driving device according to any one of the claims 1 to 7, **characterized in that** the control pistons (15, 16) are provided with spring devices (17, 18) which return the control pistons to the starting or basic position.

9. Driving device according to any one of the claims 1 to 8, **characterized in that** the auxiliary release device is integrated in the transmission block of the motor vehicle.

10. Driving device according to any one of the preceding claims, **characterized in that** the oil volume of the auxiliary release device is separated from the control pressure lines (27, 28) of the transmission via seals (25, 26).

11. Driving device according to any one of the preceding claims, **characterized in that** the seals (25, 26) are arranged on the control pistons (15, 16).

## Revendications

1. Dispositif d'entraînement, particulièrement pour l'entraînement des roues d'un véhicule automobile, doté d'un propulseur et d'une boîte de vitesses mécanique placée en aval et de deux embrayages à friction (3, 4) débrayables, où les embrayages à friction (3, 4) sont fermés par effet de ressort et ouverts par pression hydraulique, celle-ci se trouvant amenée par l'intermédiaire des valves de pilotage (13, 14) et des pistons de commande correspondants (15, 16) ainsi que les conduites de pilotage (19, 20) aux embrayages à friction (3, 4),
- par les embrayages à friction (3, 4), le propulseur peut être connecté à la boite de vitesses,
- les deux embrayages à friction (3, 4) en cas de chute de pression dans le système hydraulique sont fermés et remplissent la fonction d'un frein de stationnement,
- les pistons de commande (15, 16) sont reliés par les conduites (11, 12) à un dispositif auxiliaire de déclenchement de façon coopérante, celui-ci présentant un piston accumulateur (7) et un cylindre accumulateur (8) et qui à l'état non actionné, contient un volume d'huile maintenu exempt de pression et
- en cas d'actionnement du piston accumulateur (7) le volume d'huile accumulé dans le cylindre accumulateur (8) entraîne un décalage des pistons de commande correspondants (15, 16), afin de connecter les conduites (11, 12) aux conduites de pilotage (19, 20), de façon à ce que le volume d'huile accumulé dans le dispositif auxiliaire de déclenchement vienne à alimenter les embrayages à friction dans le sens d'une séparation, **caractérisé en ce que**
- le cylindre accumulateur (8) coopère par l'intermédiaire d'une conduite de liaison (21) avec un réservoir (22) et
- que le dispositif auxiliaire de déclenchement est équipé d'un dispositif de verrouillage (34, 24) qui interrompt en cas d'actionnement du piston accumulateur (7) la liaison vers le réservoir (22) du dispositif auxiliaire de déclenchement.

2. Dispositif d'entraînement selon revendication 1,
**caractérisé en ce que** le dispositif de verrouillage se compose d'un étranglement (24) au passage d'une section (9) vers la conduite de liaison (21), qui en cas d'actionnement du piston accumulateur (7) par une section (34) d'un diamètre réduit de la section (9) du piston accumulateur (7) est traversée de manière étanche.

3. Dispositif d'entraînement selon revendication 2, **caractérisé en ce que** la section (9) du piston accumulateur (7) est traversé par un trou axial (32), qui d'un côté se trouve en liaison avec le volume (10) du cylindre accumulateur et d'autre côté est lié, par l'intermédiaire d'un canal (33), avec la paroi extérieure de la section (34) du diamètre réduit du tenon (31), de telle manière, qu'à l'état non actionné du dispositif auxiliaire de déclenchement, il existe une communication des fluides entre le volume (10) et le réservoir (22).

4. Dispositif d'entraînement selon une des revendications précédentes,
**caractérisé en ce que** l'extrémité du trou (32) dans le tenon (31) dirigée vers l'étranglement (24) est équipée d'une valve de surpression (35) contrainte par ressort.

5. Dispositif d'entraînement selon une des revendications précédentes,
**caractérisé en ce que** le piston accumulateur (7) peut être actionné manuellement.

6. Dispositif d'entraînement selon revendication 5,
**caractérisé en ce que** le piston accumulateur (7) peut être décalé dans le sens axial à l'aide d'un filetage disposé sur le tenon (31).

7. Dispositif d'entraînement selon revendication 6,
**caractérisé en ce que** le piston accumulateur (7) est muni d'une tête hexagonale ou d'un six pans creux.

8. Dispositif d'entraînement selon une des revendications 1 à 7,
**caractérisé en ce que** les pistons de commande (15, 16) sont munis de dispositifs à ressort (17, 18) qui repoussent les pistons de commande en position de départ respectivement de repos.

9. Dispositif d'entraînement selon une des revendications 1 à 8,
**caractérisé en ce que** le dispositif auxiliaire de déclenchement est intégré au bloc de la boite de vitesses du véhicule.

10. Dispositif d'entraînement selon une des revendications précédentes,
**caractérisé en ce que** le volume d'huile du dispositif auxiliaire de déclenchement est séparé par des joints (25, 26) des conduites de pilotage (27, 28) de la boîte de vitesses.

11. Dispositif d'entraînement selon une des revendications précédentes,
**caractérisé en ce que** les joints (25, 26) sont prévus sur les pistons de commande (15, 16).
